# EUROPÄISCHE PATENTSCHRIFT

(11) **EP 1 302 351 B1**
(45) Veröffentlichungstag und Bekanntmachung des Hinweises auf die Patenterteilung: **20.02.2008**
(21) Anmeldenummer: 02022841.7
(22) Anmeldetag: 14.10.2002
(51) Int. Cl.: B60J 7/14, B60J 7/12

(54) **Ablegbares Fahrzeugdach für ein Cabriolet**
Storable roof for convertible vehicle
Toit escamotable pour véhicule convertible

(30) Priorität: 12.10.2001 DE 10150218
(43) Veröffentlichungstag der Anmeldung: 16.04.2003
(73) Patentinhaber: Webasto AG, 82131 Stockdorf (DE)
(72) Erfinder: Reinsch, Burkhard, 87600 Kaufbeuren (DE)
(74) Vertreter: Konnerth, Dieter Hans

(56) Entgegenhaltungen:
- EP-A- 1 074 415
- DE-A- 10 108 493
- DE-A- 10 119 069
- DE-A- 19 642 152

## Beschreibung

Die Erfindung betrifft ein Fahrzeugdach mit einem vorderen Dachteil, einem mittleren Dachteil und einem hinteren Dachteil, die zwischen einer den Fahrzeuginnenraum überdeckenden Schließstellung und einer den Fahrzeuginnenraum freigebenden Ablagestellung in einem heckseitigen Verdeckkasten verstellbar sind, wobei das mittlere Dachteil über eine Lenkereinrichtung an der Karosserie schwenkbar gelagert ist und das vordere Dachteil mittels einer Lenkereinrichtung am mittleren Dachteil bewegbar gelagert ist und beim Ablegen auf das mittlere Dachteil verlagert wird.

Aus der DE 199 34 673 C1 ist ein gattungsgemäßes Fahrzeugdach bekannt geworden, bei dem das mittlere Dachteil mittels eines Hauptviergelenks am Fahrzeug gelagert ist, das vordere Dachteil mittels eines Viergelenks am mittleren Dachteil gelagert ist und das hintere Dachteil am hinteren Hauptlenker des Hauptviergelenks befestigt und mit diesem verschwenkt, wobei beim Verschwenken des Fahrzeugdaches sämtliche Dachteile mittels einer Zwangsbewegung geführt sind. Die Dachteile sind im Kofferraum des Fahrzeugs derart übereinander abgelegt, daß das hintere Dachteil mit seiner Unterseite nach oben zeigt, während darüber das vordere Dachteil in gleichsinniger oder gleichbombierter Stellung über dem mittleren Dachteil abgelegt ist, so daß die Oberseiten nach oben weisen. Ein Kofferraum- und Verdeckkastendeckel wird vor dem Ablegen des Fahrzeugdaches nach hinten geschwenkt, um dem hinteren Dachteil sein Schwenkbewegung in den Kofferraum zu gestatten. Bei geschlossenem Dach liegt ein Vorderrand des Verdeckkastendeckels auf einem Hinterrand des hinteren Dachteils auf. Da das hintere Dachteil gegensinnig oder gegenbombiert zu den beiden vorderen Dachteilen abgelegt ist, wird ein in vertikaler Richtung höherer Stauraum im Kofferraum benötigt.

Aus der DE 199 62 070 A1 ist ein vergleichbares Fahrzeugdach bekannt geworden, bei dem ebenfalls das vordere Dachteil mittels eines Viergelenks an dem mittleren Dachteil eines dreiteiligen Daches schwenkbar angelenkt ist, das mittlere Dachteil mittels eines Hauptviergelenks an der Karosserie schwenkbar gelagert und das hintere Dachteil an einem Lenker des Hauptviergelenks angebracht ist und mit diesem verschwenkt. Auch bei diesem Dach sind das vordere und das mittlere Dachteil gleichbombiert oberhalb des hinteren gegenbombiert abgelegten Dachteils im Kofferraum angeordnet.

Die ältere, nachveröffentlichte DE 101 19 069 A1 offenbart ein Fahrzeugdach mit drei Dachteilen, wobei beim Verstellen des Daches in seine Ablagestellung das vordere Dachteil unter das mittlere Dachteil und das hintere Dachteil über das mittlere Dachteil in eine gleichbombierte Anordnung verstellt wird. In alternativer Gestaltung ist vorgesehen, daß das vordere Dachteil über das mittlere Dachteil und das hintere Dachteil unter das mittlere Dachteil in eine gleichbombierte Anordnung verstellt wird.

Aus der DE 101 08 493 A1 ist ein Fahrzeugdach eines Cabriolets mit einem vorderen Dachteil, einem mittleren Dachteil und einem hinteren Dachteil bekannt geworden, die zwischen einer den Fahrzeuginnenraum überdeckenden Schließstellung und einer den Fahrzeuginnenraum freigebenden Ablagestellung in einem heckseitigen Verdeckkasten verstellbar sind, wobei das mittlere Dachteil über eine Lenkereinrichtung an der Karosserie schwenkbar gelagert ist und das vordere Dachteil mittels einer Lenkereinrichtung am mittleren Dachteil bewegbar gelagert ist und beim Ablegen auf das mittlere Dachteil verlagert wird, wohingegen das hintere Dachteil umschwenkt und gegenbombiert unter dem mittleren Dachteil zu liegen kommt. Ein vorderer Lenker der vorderen Lenkereinrichtung ist mittels eines Drehlagers schwenkbar gelagert, das an einem am mittleren Dachteil nach vorne vorstehenden Tragarm vor der Dachfläche des mittleren Dachteils angeordnet ist, und der vordere Lenker ist über ein Hebelgetriebe angetrieben.

Der Erfindung liegt die Aufgabe zugrunde, ein eingangs genanntes Fahrzeugdach zu schaffen, das eine raumsparende Ablagestellung der Dachteile im Verdeckkasten unter Verwendung einer einfachen Kinematik ermöglicht.

Die Aufgabe wird bei dem oben genannten Fahrzeugdach erfindungsgemäß dadurch gelöst, daß das hintere Dachteil mittels einer Lenkereinrichtung am mittleren Dachteil schwenkbar gelagert ist und beim Ablegen des Daches über das mittlere Dachteil verlagert wird, so daß die drei Dachteile in gleichbombierter Stellung übereinander abgelegt sind. In dieser Stapelanordnung kann das hintere Dachteil sowohl über dem vorderen Dachteil wie auch unter dem vorderen Dachteil und in beiden Fällen oberhalb des mittleren Dachteils angeordnet sein. Durch die vorgesehene Lagerung am mittleren Dachteil wird gegenüber einer festen Anbringung an der Hauptlagereinrichtung die Möglichkeit einer festlegbaren Verschwenkung des hinteren Dachteils bereitgestellt, die auf den gesamten Ablagevorgang einstellbar und abstimmbar ist, wobei auch die Bewegung einer Verdeckkastenklappe und/oder einer Hutablage mit einbezogen und berücksichtigt werden kann. Mittels der drei Hardtop-Dachteile kann ein längerer Fahrzeuginnenraum auch eines viersitzigen Cabriolets überdeckt werden, die dennoch platzsparend abgelegt werden können. Zur Verlängerung des Daches kann vorgesehen sein, daß am vorderen Dachteil nochmals ein Frontdachteil gelagert ist, das beim Ablegen des Daches über oder unter das vordere Dachteil verlagerbar ist. Das vordere Dachteil ist somit allgemeiner eine Dachteileinrichtung mit zumindest einem Dachteil.

Vorteilhafte Ausgestaltungen der Erfindung sind in den Unteransprüchen angegeben.

Vorzugsweise ist das Fahrzeugdach bzw. die Lagerkinematik derart ausgelegt, daß sich beim Schließen das Daches das hintere Dachteil mit seinem Hinterrand auf eine geschlossene Verdeckkastenklappe abdichtend auflegt. Dies gestattet eine einfachere Konstruktion des hinteren unteren Abschlusses des hinteren Dachteils, da lediglich eine Dichtung z. B. an der Unterseite des Hinterrandes des hinteren Dachteils erforderlich ist, die auf einer oberseitigen Gegenfläche an der Verdeckkastenklappe aufliegt. Die Dichtung kann jedoch auch an der Verdeckkastenklappe angebracht sein.

In einer bevorzugten Gestaltung erfolgt die Schwenkbewegung des hinteren Dachteils relativ zum mittleren Dachteil in Abhängigkeit von der Schwenkbewegung der das mittlere Dachteil lagernden Lenkereinrichtung. So kann die Schwenkbewegung des hinteren Dachteils unmittelbar mit der Verschwenkung des mittleren Dachteils einsetzen oder sie beginnt zeitversetzt nach einer anfänglichen Verschwenkung des mittleren Dachteils.

Eine einfache Gestaltung sieht vor, daß das Hintere Dachteil mittels einer Kinematik mit der das mittlere Dachteil lagernden Lenkereinrichtung zwangsgekoppelt ist, so daß die Schwenkbewegung des mittleren Dachteils unmittelbar eine Schwenkbewegung des hinteren Dachteils bewirkt. Des weiteren kann die Lenkereinrichtung für das vordere Dachteil mittels einer Kinematik mit der das mittlere Dachteil lagernden Lenkereinrichtung zwangsgekoppelt sein, so daß auch für das vordere Dachteil kein eigener Antrieb erforderlich ist.

Für den Bewegungsablauf beim Ablegen des Daches ist es zweckmäßig, wenn eine an einer Verdeckkastenklappe vorderseitig angeordnete Hutablage an dieser bewegbar gelagert ist, so daß sie beim Hochschwenken der Verdeckkastenklappe in eine Rückzugstellung unter die Verdeckkastenklappe verlagerbar ist. Damit kann auf einfache Weise der für die Ablagebewegung insbesondere des hinteren Dachteils erforderliche Weg geöffnet werden.

Dabei kann eine gesteuerte Bewegungsabfolge vorgesehen sein, wonach beim Ablegen des Daches nach dem Anheben des Hinterrandes des hinteren Dachteils über die Verdeckkastenklappe zunächst diese an ihrem Vorderrand in ihre Offenstellung hochgeschwenkt wird und dabei die Hutablage in ihre Rückzugstellung unter die Verdeckkastenklappe verlagert wird. Auf diese Weise wird bei der Absenkbewegung des hinteren Dachteils in den Verdeckkasten dem Hinterrand des hinteren Dachteils eine Bewegungsbahn vor dem Vorderrand der Verdeckkastenklappe und dem Vorderrand der Hutablage bereitgestellt.

Gemäß einer alternativen Gestaltung ist das hintere Dachteil mittels eines eigenen Antriebs relativ zum mittleren Dachteil bewegbar. Dann kann das hintere Dachteil zunächst über das mittlere Dachteil verlagert werden, bevor die Hauptschwenkbewegung des mittleren Dachteils einsetzt. Durch das anfangs nach vorne verlagerte hintere Dachteil kann auch eine Verdeckkastenklappe verwendet werden, die eine integrierte oder starr angebrachte Hutablage enthält und zum Hochschwenken aus Platzgründen in Längsrichtung nicht verkürzt werden muß.

Zweckmäßigerweise kann auch das hintere Dachteil und das vordere Dachteil zur gemeinsamen Bewegung gekoppelt und mittels eines eigenen Antriebs bewegbar sein. Dadurch wird die Bewegung dieser beiden Dachteile gemeinsam gesteuert und ausgeführt und kann unabhängig von der Schwenkbewegung der Lenkereinrichtung des mittleren Dachteils erfolgen.

Gemäß einer bevorzugten Ausgestaltung des Fahrzeugdaches ist vorgesehen, daß ein hinterer Lenker der vorderen Lenkereinrichtung am mittleren Dachteil um eine von dessen Vorderrand zurückversetzte Schwenkachse schwenkbar gelagert ist und beim Ablegen des Daches aus der Dachfläche des mittleren Dachteils nach oben ausschwenkt. Dabei ist es zweckmäßig, wenn ein vorderer Lenker der vorderen Lenkereinrichtung in einem Gelenk schwenkbar gelagert ist, das an einem am mittleren Dachteil nach vorne vorstehenden Tragarm vor der Dachfläche des mittleren Dachteils angeordnet ist, und wenn der hintere Lenker in Schließstellung des Daches bündig zur Dachfläche des mittleren Dachteils oder unterhalb der Dachfläche angeordnet ist.

Vorzugsweise ist der hintere Lenker in Schließstellung in einer sich nach oben öffnenden Vertiefung des mittleren Dachteils aufgenommen, so daß die Dachfläche bündig und ohne Vorsprünge gebildet ist.

Wenn der hintere Lenker in zurückgeschwenkter Offenstellung zumindest teilweise in den Hinterabschnitt der Vertiefung abgesenkt ist, kann somit der Schwenkwinkel vergrößert werden. Das Fahrzeugdach ist zweckmäßigerweise derart gebildet, daß die Vertiefung zwischen einem Mittelteil und einem Seitenteil des mittleren Dachteils angeordnet ist.

Wenn in Schließstellung des Daches eine Blende den Hinterabschnitt der Vertiefung vom hinteren Lenker nach hinten hin abdeckt, wird eine glattflächige Oberfläche des Daches bereitgestellt. Die Blende kann beispielsweise durch den verschwenkenden hinteren Lenker in die Vertiefung herabgedrückt wird, wobei sich der Lenker auf die Blende legt. Dazu ist die Blende beispielsweise an ihrem Hinterende an dem mittleren Dachteil befestigt und wird an ihrem Vorderende durch einen rückseitigen Vorsprung des verschwenkenden hinteren Lenkers in die Vertiefung herabgedrückt.

Der hintere Lenker kann sowohl am Hinterende des vorderen Dachteils wie auch vor oder hinter dessen Hinterende angelenkt sein.

Die Vertiefung kann auch dafür vorgesehen sein, daß der vordere Lenker der vorderen Lenkereinrichtung in seiner zurückgeschwenkten Offenstellung in den Vorderabschnitt der Vertiefung abgesenkt ist.

Gemäß einer bevorzugten Ausgestaltung des Fahrzeugdaches ist vorgesehen, daß ein vorderer Lenker der vorderen Lenkereinrichtung mittels eines Drehlagers schwenkbar gelagert ist, das an einem am mittleren Dachteil nach vorne vorstehenden Tragarm vor der Dachfläche des mittleren Dachteils angeordnet ist, und daß der vordere Lenker über ein Hebelgetriebe angetrieben ist. Vorzugsweise ist das Hebelgetriebe mit einem Hauptschwenkantrieb zum Ablegen des Daches zwangsgekoppelt oder es weist einen eigenen Antrieb auf.

Zweckmäßigerweise ist der vordere Lenker über eine Antriebsstange und ein zwischengeschaltetes Hebelgetriebe angetrieben, das einen am mittleren Dachteil um eine fixe Schwenkachse schwenkbaren Anlenkhebel in einer solchen Anordnung aufweist, daß ein größerer Antriebshebelarm bei gleichbleibender oder reduzierter Antriebsbewegung der Antriebsstange bereitgestellt ist. Eine bevorzugte Ausgestaltung sieht vor, daß der vordere Lenker über eine Antriebsstange und ein zwischengeschaltetes Hebelgetriebe angetrieben ist, das einen am mittleren Dachteil um eine fixe Schwenkachse schwenkbaren Anlenkhebel aufweist, an dem die Antriebsstange angelenkt ist, wobei die fixe Schwenkachse des Anlenkhebels derart angeordnet ist, daß zumindest in einer der beiden Endlagen der Schwenkbewegung des vorderen Lenkers der bezogen auf die Antriebsstange seitliche Abstand der Schwenkachse vom Anlenkpunkt der Antriebsstange am Anlenkhebel größer ist wie der seitliche Abstand des Drehlagers des vorderen Lenkers vom Anlenkpunkt der Antriebsstange am Anlenkhebel.

Nachfolgend wird das Fahrzeugdach anhand von Ausführungsbeispielen unter Bezugnahme auf die Zeichnung näher erläutert. Es zeigt:
- Fig. 1: in einer Seitenansicht in schematischer Teildarstellung ein Cabriolet mit einem Hardtop-Fahrzeugdach mit einem vorderen, einem mittleren und einem hinteren Dachteil in geschlossener Stellung;
- Fig. 2 bis 7: in einer jeweiligen Seitenansicht in schematischer Darstellung die drei Dachteile beim Ablegen des Hardtop-Fahrzeugdaches in unterschiedlichen Stellungen;
- Fig. 8: in einer Seitenansicht in vergrößerter Darstellung das vordere Dachteil beim Hochschwenken über das mittlere Dachteil;
- Fig. 9: in einer Seitenansicht in schematischer Teildarstellung eine Lenkerverbindung eines Viergelenks zwischen dem vorderen Dachteil und dem mittleren Dachteil;
- Fig. 10 bis 12: in jeweiligen schematischen Seitenansichten den hinteren Lenker des Viergelenks beim Verschwenken des vorderen Dachteils auf das hintere Dachteil;
- Fig. 13: in einer perspektivischen Draufsicht auf das Dach das vordere Dachteil beim Hochschwenken über das mittlere Dachteil;
- Fig. 14: in einer vergrößerten Ausschnittsdarstellung aus Fig. 3 ein Hebelgetriebe für den vorderen Lenker des vorderen Viergelenks;
- Fig. 15: in einer perspektivischen Draufsicht in schematischer Darstellung das Hebelgetriebe mit den benachbarten Dachteilen;
- Fig. 16: in einer Seitenansicht in gegenüber Fig. 1 vergrößerter Darstellung das hinter Dachteil in Schließstellung;
- Fig. 17: in einer Seitenansicht in vergrößerter Darstellung entsprechend Fig. 5 die Lagerung des mittleren und des hinteren Dachteils;
- Fig. 18: in einer Seitenansicht in schematischer Teildarstellung ein weiteres Ausführungsbeispiel eines Hardtop-Fahrzeugdaches mit einem vorderen, einem mittleren und einem hinteren Dachteil in geschlossener Stellung; und
- Fig. 19: in einer Seitenansicht in vergrößerter Ausschnittsdarstellung das in Fig. 18 dargestellte Fahrzeug in einer Zwischenöffnungsstellung.

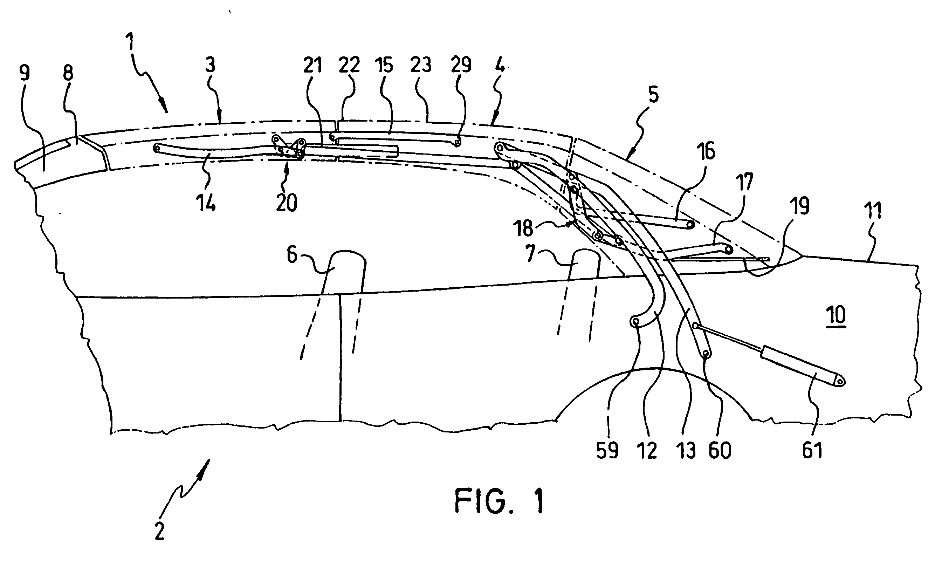

Ein Fahrzeugdach 1 eines nicht näher dargestellten Cabriolets 2 ist als zu öffnendes Hardtop mit einem vorderen Dachteil 3, einem mittleren Dachteil 4 und einem hinteren Dachteil 5 gestaltet (siehe Fig. 1). Das Cabriolet 2 kann eine Sitzreihe oder gemäß Fig. 1 eine vordere und eine hintere Sitzreihe 6 bzw. 7 aufweisen, so daß die Längen der einzelnen Dachteile 3, 4, 5 an die jeweilige Länge des Fahrzeuginnenraumes angepaßt sind. Beim Öffnen und Ablegen des Fahrzeugdachs 1 werden, nachdem des vordere Dachteil 3 von einem Windlauf 8 oder von den A-Säulen 9 abgekoppelt worden sind, das vordere Dachteil 3, das mittlere Dachteil 4 und das hintere Dachteil 5 in einen Dachablageraum oder Verdeckkasten 10 abgelegt, der hinter der hinteren Sitzreihe 7 im Heckbereich des Cabriolets 2 angeordnet und von einer Verdeck- oder Kofferraumklappe 11 abdeckbar ist.

Die drei Dachteile 3, 4, 5 sind über in den Figuren dargestellte Lagerungen schwenkbar gelagert, die jeweils beidseits an den Dachteilen vorgesehen sind. Das mittlere Dachteil 4 ist mittels einem einen Hauptlenker 12 und eine Hauptsäule 13 aufweisenden Hauptviergelenk an der Karosserie derart schwenkbar gelagert, daß es im Verdeckkasten 10 mit seiner Oberseite nach oben weisend abgelegt ist. Das vordere Dachteil 3 ist mittels eines Viergelenks, das einen vorderen Lenker 14 und einen hinteren Lenker 15 enthält, am mittleren Dachteil 4 schwenkbar gelagert und schwenkt beim Ablegen gleichbombiert, d. h. ebenfalls mit nach oben weisender Oberseite auf das mittlere Dachteil 4. Das hintere Dachteil 5 oder Heckelement, das z. B. eine Heckscheibe enthält, ist mittels eines vorderen Hebels 16 und eines hinteren Hebels 17 in Viergelenkanordnung an einem Lagerarm 18 schwenkbar gelagert, der am mittleren Dachteil 4 angebracht ist und über dessen Hinterende nach hinten hinaussteht.

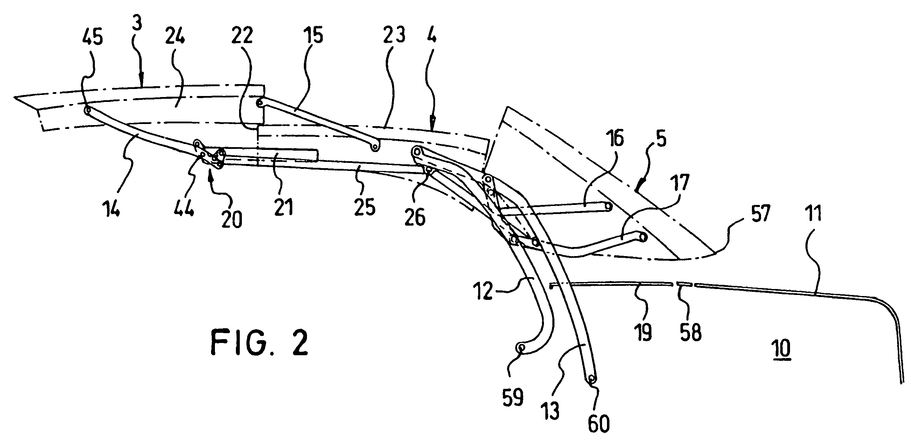

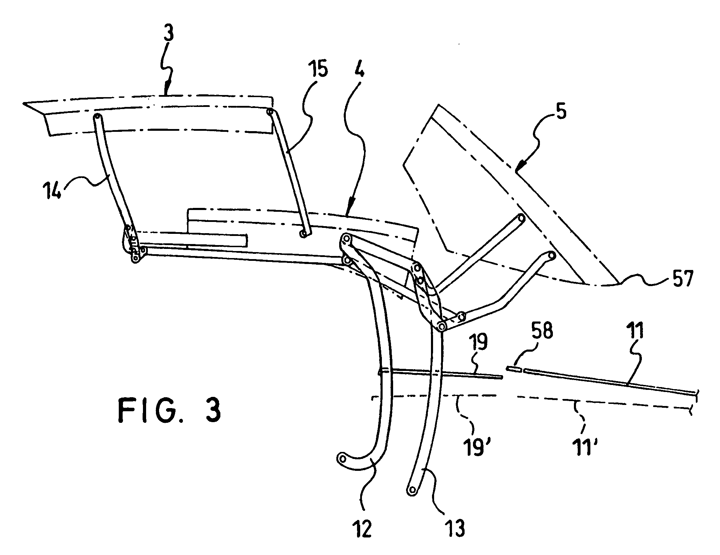

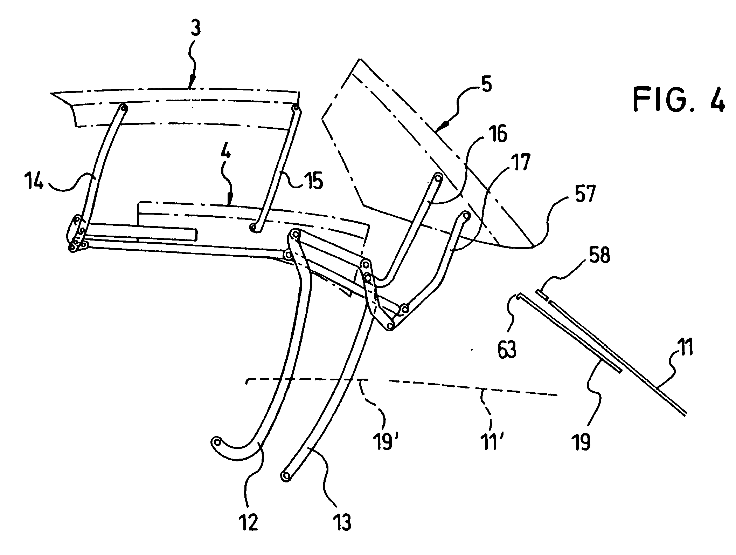

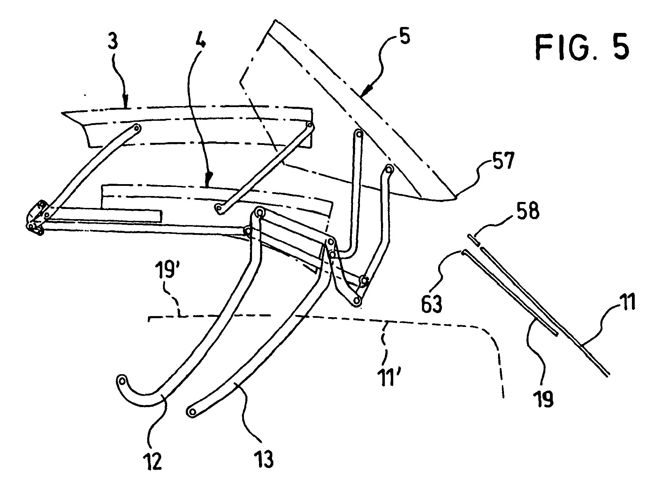

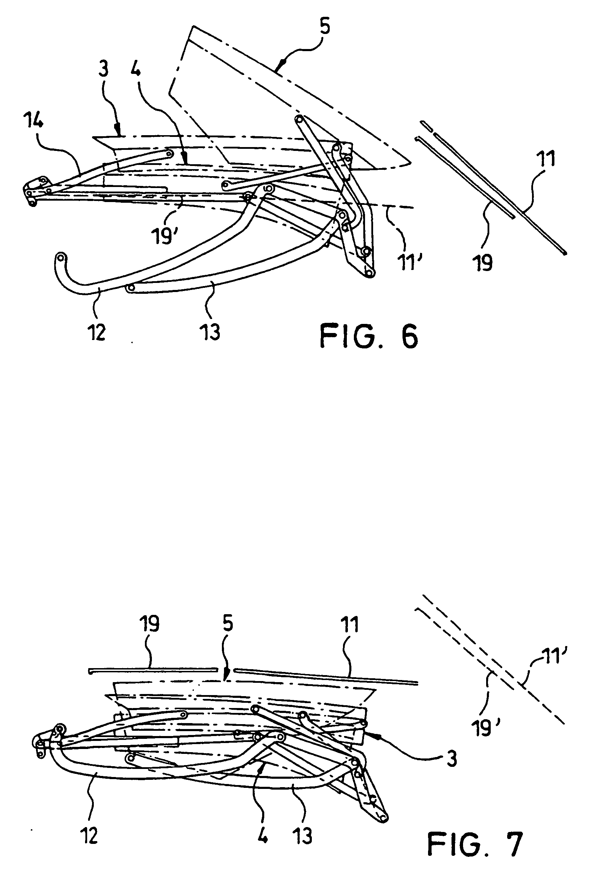

Beim Ablegen des Hardtopdaches 1 schwenkt das vordere Dachteil 3 auf das mittlere Dachteil 4 und das hintere Dachteil 5 auf das vordere Dachteil 3. Diese kompakte gleichbornbierte Einheit schwenkt dann in den Verdeckkasten 10. Die Ablagebewegung wird durch Verschwenken des Hauptviergelenks 12, 13 bewirkt, das beispielsweise über eine kinematische Zwangskopplung auch das vordere Viergelenk 14, 15 und das hintere Viergelenk 16, 17 verschwenkt. Die Ablagebewegung der drei Dachteile 3, 4, 5 erfolgt kontinuierlich (siehe Fig. 2 bis 7). Beim Ablegen des Daches 1 wird die Verdeckkastenklappe 11 mit einer daran gelagerten Hutablage 19 angehoben (siehe Fig. 3, mit 11' und 19' sind die Ruhelage der Verdeckkastenklappe bzw. der Hutablage bezeichnet) und mit ihrer Vorderkante 58 in die Offenstellung hochgeschwenkt (Fig. 4), während die Hutablage 19, die an der Verdeckkastenklappe 11 bewegbar gelagert ist, nach hinten unter die Verdeckkastenklappe 11 verschoben wird. Das weitere Verschwenken des Hauptviergelenks 12, 13 senkt das vordere Dachteil 3 auf das mittlere Dachteil 4 und verschwenkt das hintere Dachteil 5 auf das vordere und das mittlere Dachteil 3 bzw. 4 (Fig. 5 und 6), bis alle drei Dachteile 3, 4, 5 in gleichgerichteter Stapelanordnung vollständig in den Verdeckkasten 10 abgesenkt sind, woraufhin die Verdeckkastenklappe 11 wieder herabschwenkt und die Hutablage 19 nach vorne ausfährt und schließlich ihre Abdeckstellung einnimmt (Fig. 7).

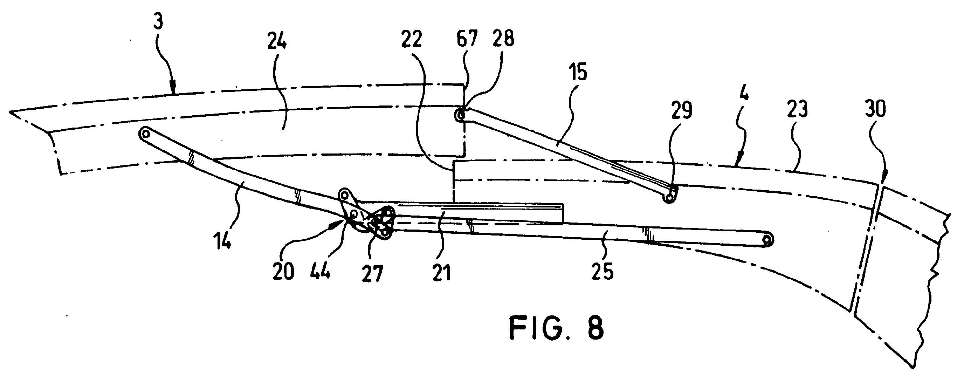

Der vordere Lenker 14 des das vordere Dachteil 3 lagernden vorderen Viergelenks ist mittels eines Hebelgetriebes 20 am Vorderende eines Tragarms 21 schwenkbar gelagert (siehe insbesondere Fig. 8), der am mittleren Dachteil 4 angebracht ist und sich nach vorne über den Vorderrand 22 der Dachschale 23 des mittleren Dachteils 4 hinaus in einer derartigen Anordnung erstreckt, daß er in Schließstellung vom Seitenbereich 24 des vorderen Dachteils 3 abgedeckt ist. Eine vordere Antriebs- oder Koppelstange 25 zum Verschwenken des vorderen Lenkers 14 ist mittels eines hinteren Gelenks 26 am Hauptlenker 12 und mittels eines vorderen Gelenks 27 am Hebelgetriebe 20 angelenkt.

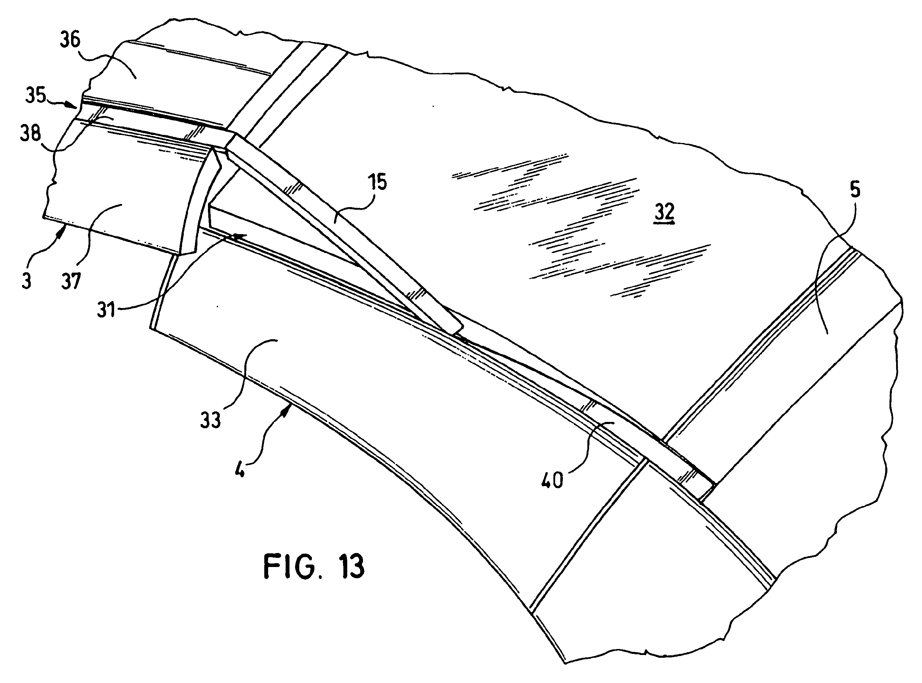

Das Vorderende des hinteren Lenkers 15 ist mittels eines Gelenks 28 am Hinterende 67 des vorderen Dachteils 3 schwenkbar angelenkt. Das Hinterende des hinteren Lenkers 15 ist mittels eines Gelenks 29 schwenkbar gelagert, das am mittleren Dachteil 4 in etwa mittig zwischen dem Vorderrand 22 und dem Hinterrand 30 der Dachschale 23 angeordnet und gegenüber der Oberfläche der Dachschale 23 abgesenkt ist, so daß der hintere Lenker 15 in Schließstellung des Daches 1 in einer Vertiefung 31 in der Art einer Längsnut oder eines Längskanals aufgenommen ist, die sich zwischen dem Mittelabschnitt 32 und dem Seitenabschnitt 33 (siehe Fig. 13) des mittleren Dachteils 4 über dessen Länge erstreckt. Die Vertiefung 31 ist beispielsweise ein sogenannter Schweißgraben, in dem die beiden herabgebogenen und aneinander angrenzenden Seitenränder des Mittelabschnitts 32 bzw. des Seitenabschnitts 33 z. B. durch Schweißen miteinander verbunden sind.

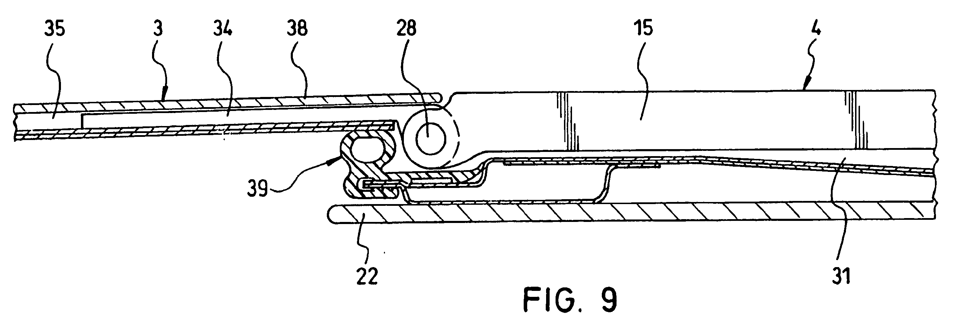

Das vordere Gelenk 28 des hinteren Lenkers 15 ist an einem länglichen Lagerteil 34 angebracht (Fig. 9), das in einer beispielsweise ebenfalls von einem Schweißgraben gebildeten Vertiefung 35 zwischen dem Mittelabschnitt 36 und dem Seitenabschnitt 37 des vorderen Dachteils 3 (Fig. 13) aufgenommen und daran befestigt ist. Eine Blende 38 oder Abdeckung deckt die Vertiefung 35 mit dem darin aufgenommenen Lagerteil 34 bündig mit der Oberfläche des vorderen Dachteils 3 ab.

Der Schweißgraben bzw. die Vertiefung 31 am mittleren Dachteil 4 bildet einen Naßbereich, der durch eine am Vorderrand 22 des mittleren Dachteils 4 angebrachte Dichtung 39 nach vorne begrenzt wird. In Schließstellung des Daches 1 liegt die Dichtung 39 an der Unterseite des vorderen Dachteils 3 dicht an.

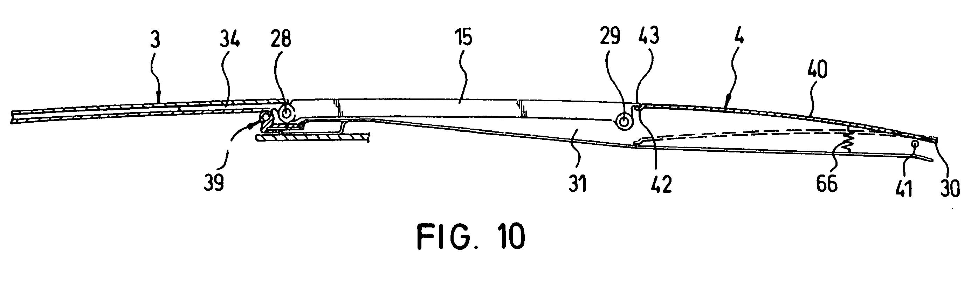

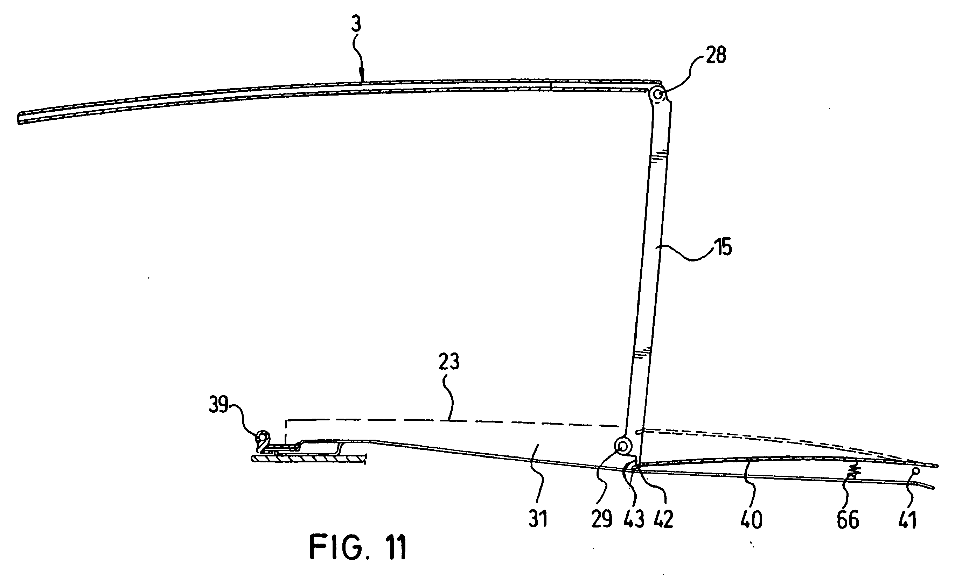

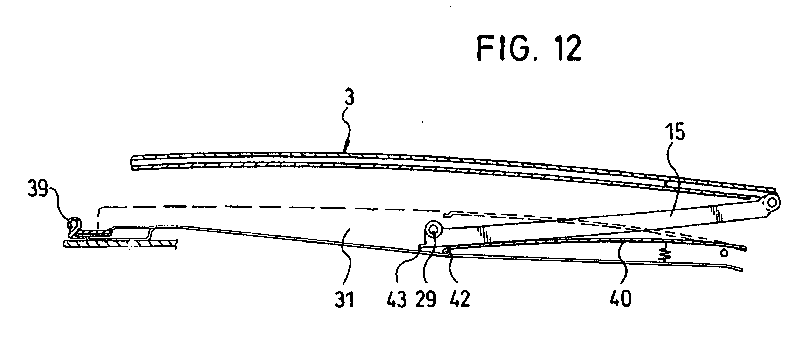

Eine Blende 40 (Fig. 10) deckt den hinteren Abschnitt der Vertiefung 31 zwischen dem Gelenk 29 am Hinterende des hinteren Lenkers 15 und dem Hinterrand 30 der Dachschale 23 ab. Die Blende 40 ist um eine hintere Drehachse 41 schwenkbar gelagert und durch eine Vorspanneinrichtung, beispielsweise eine Feder 66, nach oben in ihre Abdeckstellung vorgespannt, in der sie zur Oberseite der Dachschale 23 bündig angeordnet ist und mit ihrem abgesenkten Vorderende 42 von unten an einer Nase 43 am Hinterende des hinteren Lenkers 15 anliegt. Wenn der hintere Lenker 15 um das Gelenk 29 nach hinten verschwenkt wird, drückt die Nase 43 das Vorderende 42 der Blende 40 herab (Fig. 11 und 12), so daß sich der nach hinten verschwenkende hintere Lenker 15 in die Vertiefung 31 absenken kann und dabei die Blende 40 herabdrückt. Beim Schließen des Daches 1 hebt sich der hintere Lenker 15 aus der Vertiefung 31 und seine Nase 43 führt die Blende 40 in ihre Abdeckstellung.

Durch den vergleichsweise großen Lagerabstand zwischen dem hinteren Gelenk 29 des hinteren Lenkers 15 und einem hinteren Gelenk 44 des vorderen Lenkers 14, an dem dieser an dem Tragarm 21 schwenkbar gelagert ist, wie auch zwischen dem vorderen Gelenk 28 des hinteren Lenkers 15 und einem vorderen Gelenk 45 des vorderen Lenkers 14, das die Anlenkung am vorderen Dachteil 3 bildet, wird eine Viergelenk mit einer großen Stützbasis gebildet, die eine stabile Lagerung des vorderen Dachteils 3 ermöglicht.

Der hintere Lenker 15 ist derart gestaltet, daß er in Schließstellung des Daches 1 in seiner zur Dachoberfläche bündigen Anordnung die Vertiefung 31 optisch abdeckt, so daß eine Abdeckung für den vorderen Abschnitt der Vertiefung 31 nicht erforderlich ist.

Die Blende 40 kann in alternativer Gestaltung an ihrem Hinterende an der Vertiefung 31 des mittleren Dachteils 4 fest angebracht sein und z. B. aus Kunststoff mit einer gewissen Flexibilität gebildet sein, so daß sie sich flexibel herabbiegt, wenn sie an ihrem Vorderende 42 und durch flächige Auflage des Lenkers 15 herabgedrückt wird. Die Rückstellkraft wird durch das Kunststoffmaterial bereitgestellt.

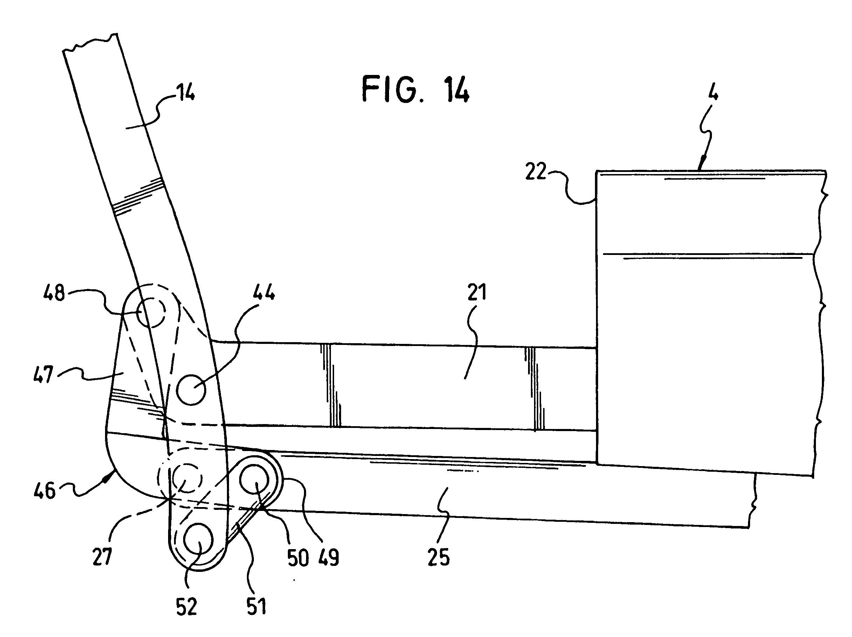

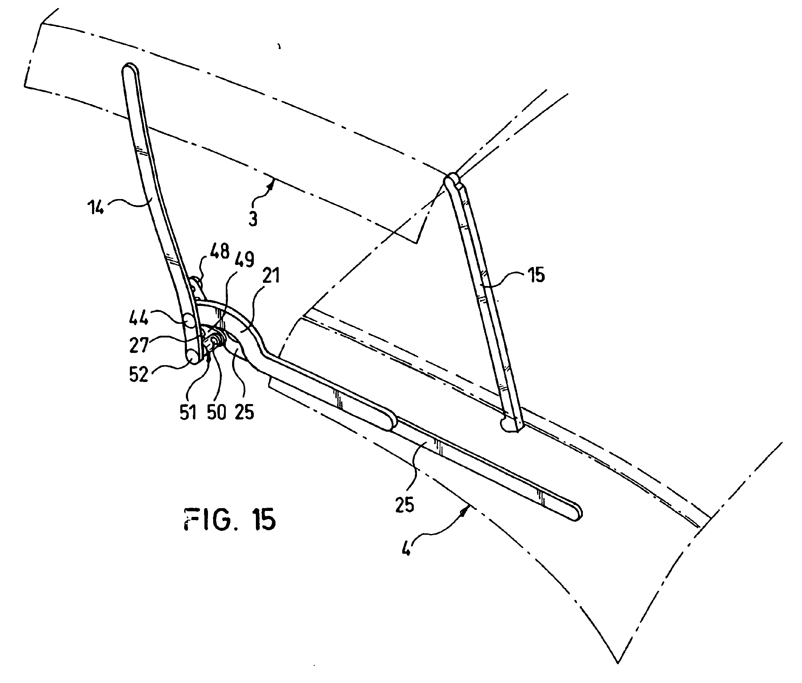

Das am Vorderende des Tragarms 21 angeordnete Hebelgetriebe 20 (siehe insbesondere Fig. 14 und 15) enthält einen beispielsweise rechtwinkligen Winkelhebel 46 mit einem ersten Schenkel 47, der endseitig am Vorderende des Tragarms 21 in einem Gelenk 48 schwenkbar gelagert ist, das oberhalb des den vorderen Lenker 14 lagernden Gelenks 44 angeordnet ist. An dem zweiten Schenkel 49 des Winkelhebels 46 ist die Koppelstange 25 in dem Gelenk 27 angelenkt, das vom Ende des zweiten Schenkels 49 zurückversetzt angeordnet ist. Am Ende des zweiten Schenkels 49 ist mittels eines Gelenks 50 ein kurzer Verbindungshebel 51 angelenkt, der andererseits mittels eines Gelenks 52 mit dem über das Gelenk 44 hinausstehenden Ende des vorderen Lenkers 14 schwenkbar verbunden ist.

Der Abstand zwischen dem Gelenk 27 und dem Gelenk 48 in zur Koppelstange 25 senkrechter Richtung bildet den wirksamen Schwenkarm für die Einleitung der Antriebskraft auf das Hebelgetriebe 20 und damit auf den vorderen Lenker 14. Durch die dargestellte Auslegung des kompakt gebauten Hebelgetriebes 20 ist der wirksame Schwenkarm stets ausreichend groß, so daß auch bei großem Schwenkwinkel des vorderen Lenkers 14 sowohl in Schließstellung wie auch in Offenstellung des Daches 1 die Koppelstange 25 von einer Totpunktstellung zum Hebelgetriebe 20 bzw. zum Gelenk 48 ausreichend weit entfernt ist.

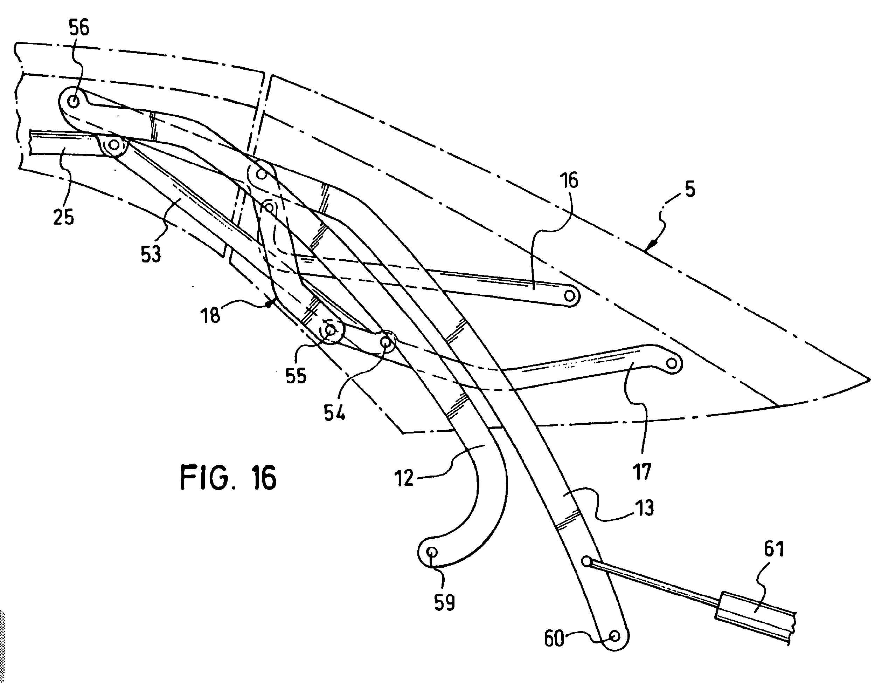

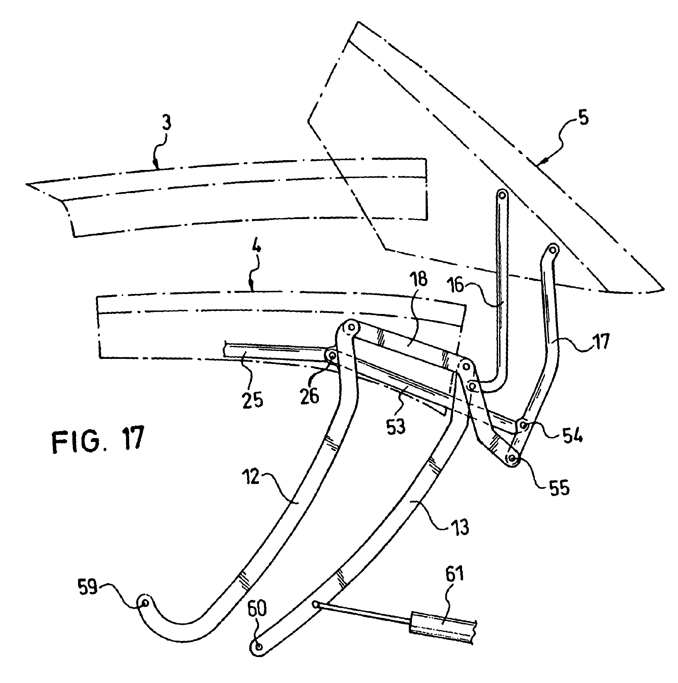

Der Antrieb zum Bewegen des hinteren Dachteils 5 (siehe insbesondere Fig. 16 und 17) enthält eine hintere Antriebsstange 53, die einerseits an dem am Hauptlenker 12 angebrachten Gelenk 26 und andererseits an einem Gelenk 54 angelenkt ist, das benachbart zu dem Gelenk 55 angeordnet ist, das den hinteren Hebel 17 des das hintere Dachteil 5 lagernden Viergelenks am Lagerarm 18 schwenkbar lagert. Beim Ablegen des Daches 1 wird der Hauptlenker 12 des Hauptviergelenks um sein Gelenk 56, mit dem er an dem Lagerarm 18 angelenkt ist, verschwenkt. Dabei wird die Schwenkbewegung des Gelenks 26 über die hintere Antriebsstange 53 und das Gelenk 54 auf den hinteren Hebel 17 übertragen. Entsprechend der Festlegung der Abstände zwischen den Gelenken 26 und 56 und den Gelenken 55 und 54 kann das Bewegungsverhalten des hinteren Hebels 17 in Abhängigkeit von der Bewegung des Hauptlenkers 12 eingestellt werden.

Über die Antriebsstange 25, die ebenfalls an dem Gelenk 26 angelenkt ist, wird gleichzeitig das vordere Dachteil 3 verschwenkt. Die Antriebsstange 25 entfällt, wenn das vordere Dachteil 3 einen eigenen Antrieb aufweist.

Durch die gekoppelte Zwangssteuerung der Bewegungen des vorderen Dachteils 3 und des hinteren Dachteils 5 während der Ablagebewegung des mittleren Dachteils 4 ist bei dem dargestellten Ausführungsbeispiel die beschriebene Verschiebung der Hutablage 19 nach hinten unter die Verdeckkastenklappe 11 erforderlich, so daß sich der Hinterrand 57 des hinteren Dachteils 5 bei der Ablagebewegung vor dem Vorderrand 58 der geöffneten Verdeckkastenklappe 11 absenken kann (siehe Fig. 4 bis 6).

Beim Schließen des Daches legt sich der eine Dichtung enthaltende Hinterrand 57 des hinteren Dachteils 5 in einfachem Bewegungsablauf von oben auf die schon geschlossene Verdeckkastenklappe 11 (Bewegung von Fig. 2 nach Fig. 1).

Der Schwenkantrieb des Hauptviergelenks um die karosseriefesten Gelenke 59 und 60 des Hauptlenkers 12 bzw. der Hauptsäule 13 erfolgt z. B. mittels einer hydraulisch betätigten Kolben-Zylinder-Einheit 61, die beispielsweise an der Hauptsäule 13 angreift.

In alternativer Gestaltung ist die Koppelstange 25 nicht mit dem Gelenk 26 verbunden, sonden mit einer eigenen Antriebseinrichtung, die über eine Steuereinrichtung für eine koordinierte Ablagebewegung gesteuert ist.

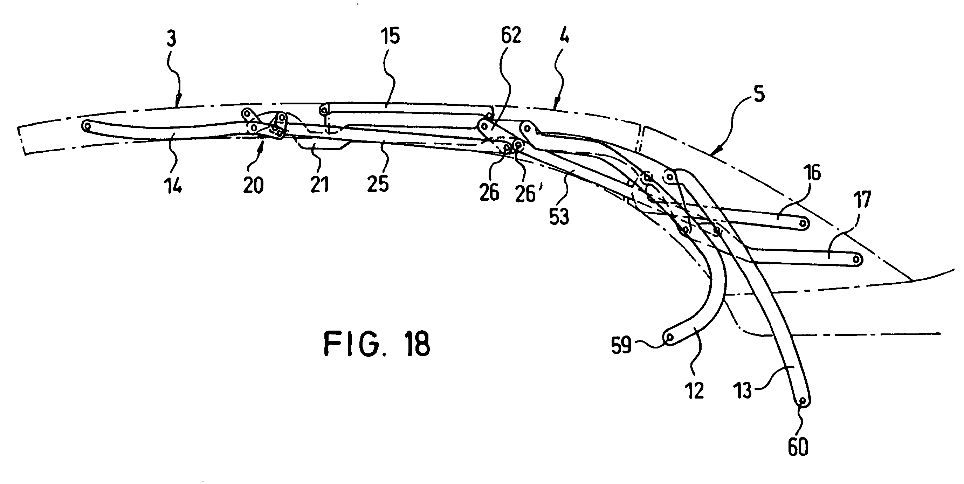

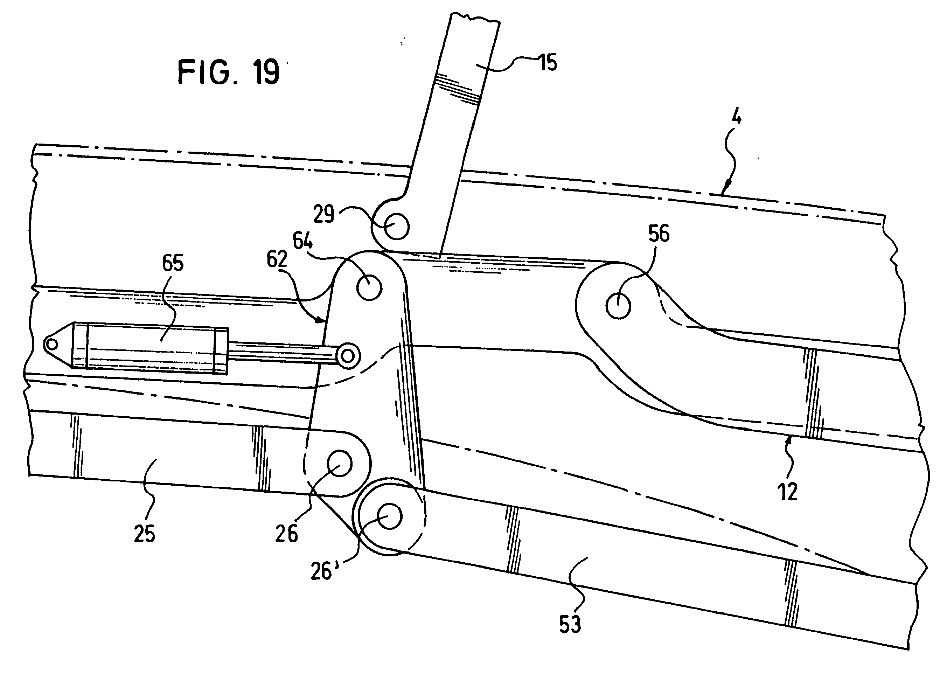

Eine weitere alternative Gestaltung sieht vor (siehe Fig. 18 und 19), daß die vordere Koppelstange 25 und die hintere Antriebsstange 53 in den Gelenken 26 und 26' miteinander verbunden sind, diese Gelenke 26 und 26' jedoch nicht an dem Hauptlenker 12 angebracht ist, sondern an einem Schwenkhebel 62, der mittels eines Gelenks 64 an dem mittleren Dachteil 4 gelagert ist. An diesem Schwenkhebel 62 greift eine Antriebseinrichtung 65 an, so daß die Bewegungen des vorderen Dachteils 3 und des hinteren Dachteils 5 gekoppelt ablaufen, jedoch durch die Steuerung der Antriebseinrichtung unabhängig von der Bewegung des Hauptviergelenks bzw. des mittleren Dachteils 4 einstellbar sind. Somit können beim Ablegen des Daches zunächst das vordere Dachteil 3 auf das mittlere Dachteil 4 und das hintere Dachteil 5 auf das mittlere Dachteil 4 bzw. auf das darüber angeordnete vordere Dachteil 3 verschwenkt werden, bevor das mittlere Dachteil 4 mit der kompakt angeordneten Einheit der drei Dachteile nach hinten in den Verdeckkasten 10 abgesenkt wird. Hierbei kann die Hutablage 19 als feste Einheit mit der Verdeckkastenklappe 11 gebildet sein, da die Verdeckkastenklappe 11 erst dann geöffnet wird, wenn das hintere Dachteil 5 über das mittlere Dachteil 4 geschwenkt worden ist und somit der Hinterrand 57 des hinteren Dachteils 5 problemlos vor dem Vorderrand 63 der Hutablage 19 vorbeibewegt werden kann.

Bei einem weiteren Ausführungsbeispiel des Fahrzeugdaches (nicht dargestellt) ist bei der Viergelenklagerung des vorderen Dachteils 3 auch der hintere Lenker 15 am vorstehenden Abschnitt des Tragarms 21 vor der Dachfläche 23 des mittleren Dachteils 4 gelagert, so daß der insbesondere gebogen oder gekröpft gebildete hintere Lenker 15 entsprechend der Anordnung, wie sie aus der DE 199 62 070 A1 oder der DE 199 34 673 C1 bekannt ist, vor und über der Dachfläche 23 des mittleren Dachteils 4 verschwenkt wird und eine beschriebene Vertiefung 31 nicht erforderlich ist. Die Antriebseinrichtung oder die Antriebseinrichtungen kann bzw. können entsprechend den voranstehenden Ausführungen gebildet sein.

Generell können statt der dargestellten Lagerungen mit Viergelenken auch Mehrgelenkeinrichtungen mit mehr als vier Gelenken verwendet werden.

### Bezugszeichenliste

- 1: Fahrzeugdach
- 2: Cabriolet
- 3: vorderes Dachteil
- 4: mittleres Dachteil
- 5: hinteres Dachteil
- 6: vordere Sitzreihe
- 7: hintere Sitzreihe
- 8: Windlauf
- 9: A-Säule
- 10: Verdeckkasten
- 11: Verdeckkastenkluppe
- 12: Hauptlenker
- 13: Hauptsäule
- 14: vorderer Lenker
- 15: hinterer Lenker
- 16: vorderer Hebel
- 17: hinterer Hebel
- 18: Lagerarm
- 19: Hutablage
- 20: Hebelgetriebe
- 21: Tragarm
- 22: Vorderrand
- 23: Dachschale
- 24: Seitenbereich
- 25: vordere Koppelstange
- 26: hinteres Gelenk
- 27: vorderes Gelenk
- 28: Gelenk
- 29: Gelenk
- 30: Hinterrand
- 31: Vertiefung
- 32: Mittelabschnitt
- 33: Seitenabschnitt
- 34: Lagerteil
- 35: Vertiefung
- 36: Mittelabschnitt
- 37: Seitenabschnitt
- 38: Blende
- 39: Dichtung
- 40: Blende
- 41: hintere Drehachse
- 42: Vorderende
- 43: Nase
- 44: hinteres Gelenk
- 45: vorderes Gelenk
- 46: Winkelhebel
- 47: erster Schenkel
- 48: Gelenk
- 49: zweiter Schenkel
- 50: Gelenk
- 51: Verbindungshebel
- 52: Gelenk
- 53: Antriebsstange
- 54: Gelenk
- 55: Gelenk
- 56: Gelenk
- 57: Hinterrand
- 58: Vorderrand
- 59: Gelenk
- 60: Gelenk
- 61: Antriebseinrichtung
- 62: Schwenkhebel
- 63: Vorderrand
- 64: Gelenk
- 65: Antriebseinrichtung
- 66: Feder
- 67: hinteres Ende

## Patentansprüche

1. Fahrzeugdach mit einem vorderen Dachteil (3), einem mittleren Dachteil (4) und einem hinteren Dachteil (5), die zwischen einer den Fahrzeuginnenraum überdeckenden Schließstellung und einer den Fahrzeuginnenraum freigebenden Ablagestellung in einem heckseitigen Verdeckkasten (10) verstellbar sind, wobei das mittlere Dachteil (4) über eine Lenkereinrichtung (12, 13) an der Karosserie schwenkbar gelagert ist und das vordere Dachteil (3) mittels einer Lenkereinrichtung (14, 15) am mittleren Dachteil (4) bewegbar gelagert ist und beim Ablegen auf das mittlere Dachteil (4) verlagert wird,
**dadurch gekennzeichnet,**
**daß** das hintere Dachteil (5) mittels einer Lenkereinrichtung (16, 17) am mittleren Dachteil (4) schwenkbar gelagert ist und beim Ablegen des Daches (1) über das mittlere Dachteil (3 bzw. 4) verlagert wird, so daß die drei Dachteile (3, 4, 5) in gleichbombierter Stellung übereinander abgelegt sind.

2. Fahrzeugdach nach Anspruch 1,
**dadurch gekennzeichnet, daß** sich beim Schließen das Daches (1) das hintere Dachteil (5) mit seinem Hinterrand (57) auf eine geschlossene Verdeckkastenklappe (11) abdichtend auflegt.

3. Fahrzeugdach nach Anspruch 1 oder 2,
**dadurch gekennzeichnet, daß** die Schwenkbewegung des hinteren Dachteils (5) relativ zum mittleren Dachteil (4) in Abhängigkeit von der Schwenkbewegung der das mittlere Dachteil (4) lagernden Lenkereinrichtung (12, 13) erfolgt.

4. Fahrzeugdach nach Anspruch 3,
**dadurch gekennzeichnet, daß** das hintere Dachteil (5) mittels einer Kinematik mit der das mittlere Dachteil (4) lagernden Lenkereinrichtung (12, 13) zwangsgekoppelt ist.

5. Fahrzeugdach nach einem der Ansprüche 1 bis 4,
**dadurch gekennzeichnet, daß** die Lenkereinrichtung (14, 15) für das vordere Dachteil (3) mittels einer Kinematik mit der das mittlere Dachteil (4) lagernden Lenkereinrichtung (12, 13) zwangsgekoppelt ist.

6. Fahrzeugdach nach einem der Ansprüche 1 bis 5,
**dadurch gekennzeichnet, daß** an einer Verdeckkastenklappe (11) vorderseitig eine Hutablage (19) bewegbar gelagert ist, so daß sie beim Hochschwenken der Verdeckkastenklappe (11) in eine Rückzugstellung unter die Verdeckkastenklappe (11) verlagerbar ist.

7. Fahrzeugdach nach Anspruch 6,
**dadurch gekennzeichnet, daß** in einer gesteuerten Abfolge beim Ablegen des Daches (1) nach dem Anheben des Hinterrandes (57) des hinteren Dachteils (5) über die Verdeckkastenklappe (11) diese an ihrem Vorderrand (58) in ihre Offenstellung hochgeschwenkt wird und dabei die Hutablage (19) in ihre Rückzugstellung unter die Verdeckkastenklappe (11) verlagert wird, um bei der Absenkbewegung des hinteren Dachteils (5) in den Verdeckkasten (10) dem Hinterrand (57) des hinteren Dachteils (5) eine Bewegungsbahn vor dem Vorderrand (58) der Verdeckkastenklappe (11) und dem Vorderrand (63) der Hutablage (19) zu ermöglichen.

8. Fahrzeugdach nach einem der Ansprüche 1 bis 7,
**dadurch gekennzeichnet, daß** das hintere Dachteil (5) mittels eines eigenen Antriebs relativ zum mittleren Dachteil (4) bewegbar ist.

9. Fahrzeugdach nach einem der Ansprüche 1 bis 8,
**dadurch gekennzeichnet, daß** das hintere Dachteil (5) und das vordere Dachteil (3) zur gemeinsamen Bewegung gekoppelt und mittels eines eigenen Antriebs bewegbar sind.

10. Fahrzeugdach nach einem der Ansprüche 1 bis 9,
**dadurch gekennzeichnet, daß** ein hinterer Lenker (15) der vorderen Lenkereinrichtung (14, 15) am mittleren Dachteil (4) um eine von dessen Vorderrand (22) zurückversetzte Schwenkachse (29) schwenkbar gelagert ist und beim Ablegen des Daches (1) aus der Dachfläche (23) des mittleren Dachteils (4) nach oben ausschwenkt.

11. Fahrzeugdach nach Anspruch 10,
**dadurch gekennzeichnet, daß** ein vorderer Lenker (14) der vorderen Lenkereinrichtung (14, 15) in einem Gelenk (44) schwenkbar gelagert ist, das an einem am mittleren Dachteil (4) nach vorne vorstehenden Tragarm (21) vor der Dachfläche (23) des mittleren Dachteils (4) angeordnet ist.

12. Fahrzeugdach nach Anspruch 10 oder 11,
**dadurch gekennzeichnet, daß** der hintere Lenker (15) in Schließstellung des Daches (1) bündig zur Dachfläche (23) des mittleren Dachteils (4) oder unterhalb der Dachfläche (23) angeordnet ist.

13. Fahrzeugdach nach einem der Ansprüche 10 bis 12,
**dadurch gekennzeichnet, daß** der hintere Lenker (15) in Schließstellung in einer sich nach oben öffnenden Vertiefung (31) des mittleren Dachteils (4) aufgenommen ist.

14. Fahrzeugdach nach Anspruch 13,
**dadurch gekennzeichnet, daß** der hintere Lenker (15) in zurückgeschwenkter Offenstellung zumindest teilweise in den Hinterabschnitt der Vertiefung (31) abgesenkt ist.

15. Fahrzeugdach nach Anspruch 13 oder 14,
**dadurch gekennzeichnet, daß** die Vertiefung (13) zwischen einem Mittelteil (32) und einem Seitenteil (33) des mittleren Dachteils (4) angeordnet ist.

16. Fahrzeugdach nach einem der Ansprüche 13 bis 15,
**dadurch gekennzeichnet, daß** in Schließstellung des Daches (1) eine Blende (40) den Hinterabschnitt der Vertiefung (31) vom hinteren Lenker (15) nach hinten hin abdeckt.

17. Fahrzeugdach nach Anspruch 16,
**dadurch gekennzeichnet, daß** die Blende (40) durch den verschwenkenden hinteren Lenker (15) in die Vertiefung (31) herabgedrückt wird.

18. Fahrzeugdach nach Anspruch 16 oder 17,
**dadurch gekennzeichnet, daß** die Blende (40) an ihrem Hinterende an dem mittleren Dachteil (4) befestigt ist und an ihrem Vorderende (42) durch einen rückseitigen Vorsprung (43) des verschwenkenden hinteren Lenkers (15) in die Vertiefung (31) herabgedrückt wird.

19. Fahrzeugdach nach einem der Ansprüche 10 bis 18,
**dadurch gekennzeichnet, daß** der hintere Lenker (15) am Hinterende (67) des vorderen Dachteils (3) angelenkt ist.

20. Fahrzeugdach nach einem der Ansprüche 10 bis 19
**dadurch gekennzeichnet, daß** der vordere Lenker (14) der vorderen Lenkereinrichtung (14, 15) in seiner zurückgeschwenkten Offenstellung in den Vorderabschnitt der Vertiefung (31) abgesenkt ist.

21. Fahrzeugdach nach einem der Ansprüche 1 bis 20,
**dadurch gekennzeichnet,**
**daß** ein vorderer Lenker (14) der vorderen Lenkereinrichtung (14, 15) mittels eines Drehlagers (44) schwenkbar gelagert ist, das an einem am mittleren Dachteil (4) nach vorne vorstehenden Tragarm (21) vor der Dachfläche (23) des mittleren Dachteils (4) angeordnet ist, und daß der vordere Lenker (14) über ein Hebelgetriebe (20) angetrieben ist.

22. Fahrzeugdach nach Anspruch 21,
**dadurch gekennzeichnet, daß** das Hebelgetriebe (20) mit einem Hauptschwenkantrieb zum Ablegen des Daches (1) zwangsgekoppelt ist oder einen eigenen Antrieb aufweist.

23. Fahrzeugdach nach Anspruch 21 oder 22,
**dadurch gekennzeichnet, daß** der vordere Lenker (14) über eine Antriebsstange (25) und ein zwischengeschaltetes Hebelgetriebe (20) angetrieben ist, das einen am mittleren Dachteil (4) um eine fixe Schwenkachse schwenkbaren Anlenkhebel in einer solchen Anordnung aufweist, daß ein größerer Antriebshebelarm bei gleichbleibender oder reduzierter Antriebsbewegung der Antriebsstange (25) bereitgestellt ist.

24. Fahrzeugdach nach einem der Ansprüche 21 bis 23,
**dadurch gekennzeichnet, daß** der vordere Lenker (14) über eine Antriebsstange (25) und ein zwischengeschaltetes Hebelgetriebe (20) angetrieben ist, das einen am mittleren Dachteil (4) um eine fixe Schwenkachse schwenkbaren Anlenkhebel (46) aufweist, an dem die Antriebsstange (25) angelenkt ist, wobei die fixe Schwenkachse (48) des Anlenkhebels (46) derart angeordnet ist, daß zumindest in einer der beiden Endlagen der Schwenkbewegung des vorderen Lenkers (14) der bezogen auf die Antriebsstange (25) seitliche Abstand der Schwenkachse (48) vom Anlenkpunkt (27) der Antriebsstange (25) am Anlenkhebel (46) größer ist wie der seitliche Abstand des Drehlagers (44) des vorderen Lenkers (14) vom Anlenkpunkt (27) der Antriebsstange (25) am Anlenkhebel (46).

## Claims

1. Vehicle roof having a front roof part (3), a central roof part (4) and a rear roof part (5), which can be displaced between a closed position covering the vehicle interior and a stored position in a hood compartment (10) at the rear, exposing the vehicle interior, the central roof part (4) being mounted on the body via a link device (12, 13) such that it can be pivoted, and the front roof part (3) being mounted on the central roof part (4) by means of a link device (14, 15) such that it can be moved and, when being stored, is displaced on the central roof part (4),
**characterized in that** the rear roof part (5) is mounted on the central roof part (4) by means of a link device (16, 17) such that it can be pivoted and, as the roof (1) is stored, is displaced over the central roof part (3 or 4), so that the three roof parts (3, 4, 5) are stored one above another in an equally cambered position.

2. Vehicle roof according to Claim 1, **characterized in that**, as the roof (1) is closed, the rear roof part (5) is placed with its rear edge (57) in a sealing manner on a closed hood compartment lid (11).

3. Vehicle roof according to Claim 1 or 2, **characterized in that** the pivoting movement of the rear roof part (5) relative to the central roof part (4) is carried out as a function of the pivoting movement of the link device (12, 13) mounting the central roof part (4).

4. Vehicle roof according to Claim 3, **characterized in that** the rear roof part (5) is coupled positively by means of a kinematic system to the link device (12, 13) mounting the central roof part (4).

5. Vehicle roof according to one of Claims 1 to 4, **characterized in that** the link device (14, 15) for the front roof part (3) is coupled positively by means of a kinematic system to the link device (12, 13) mounting the central roof part (4).

6. Vehicle roof according to one of Claims 1 to 5, **characterized in that** a parcel shelf (19) is mounted on the front side of a hood compartment lid (11) such that it can be moved, so that it can be displaced into a retracted position under the hood compartment lid (11) as the hood compartment lid (11) is pivoted up.

7. Vehicle roof according to Claim 6, **characterized in that**, in a controlled movement sequence, as the roof (1) is stored, after the rear edge (57) of the rear roof part (5) has been raised above the hood compartment lid (11), the latter is pivoted up about its front edge (58) into its open position and, in the process, the parcel shelf (19) is displaced into its retracted position under the hood compartment lid (11) in order, during the lowering movement of the rear roof part (5) into the hood compartment (10), to permit the rear edge (57) of the rear roof part (5) a movement path in front of the front edge (58) of the hood compartment lid (11) and the front edge (63) of the parcel shelf (19).

8. Vehicle roof according to one of Claims 1 to 7, **characterized in that** the rear roof part (5) can be moved relative to the central roof part (4) by means of a dedicated drive.

9. Vehicle roof according to one of Claims 1 to 8, **characterized in that** the rear roof part (5) and the front roof part (3) are coupled for the purpose of joint movement and can be moved by means of a dedicated drive.

10. Vehicle roof according to one of Claims 1 to 9, **characterized in that** a rear link (15) of the front link device (14, 15) is mounted on the central roof part (4) such that it can be pivoted about a pivot axis (29) set back from its front edge (22) and, as the roof (1) is stored, pivots out upwards from the roof surface (23) of the central roof part (4).

11. Vehicle roof according to Claim 10, **characterized in that** a front link (14) of the front link device (14, 15) is pivotably mounted in a joint (44) which is arranged on a supporting arm (21) projecting forward on the central roof part (4), in front of the roof surface (23) of the central roof part (4).

12. Vehicle roof according to Claim 10 or 11, **characterized in that**, in the closed position of the roof (1), the rear link (15) is arranged flush with the roof surface (23) of the central roof part (4) or below the roof surface (23).

13. Vehicle roof according to one of Claims 10 to 12, **characterized in that**, in the closed position, the rear link (15) is accommodated in a depression (31) in the central roof part (4) that is open at the top.

14. Vehicle roof according to Claim 13 **characterized in that** the rear link (15) is at least partly lowered into the rear section of the depression (31) when in the pivoted-back open position

15. Vehicle roof according to Claim 13 or 14, **characterized in that** the depression (13) is arranged between a central part (32) and a side part (33) of the central roof part (4).

16. Vehicle roof according to one of Claims 13 to 15, **characterized in that**, in the closed position of the roof (1), a screen (40) covers the rear section of the depression (31) towards the rear from the rear link (15).

17. Vehicle roof according to Claim 16, **characterized in that** the screen (40) is pressed down into the depression (31) by the pivoting rear link (15).

18. Vehicle roof according to Claims 16 or 17, **characterized in that** the screen (40) is fixed at its rear end to the central roof part (4) and, at its front end (42), is pressed down into the depression (31) by a projection (43) on the rear of the pivoting rear link (15).

19. Vehicle roof according to one of Claims 10 to 18, **characterized in that** the rear link (15) is attached to the rear end (67) of the front roof part (3).

20. Vehicle roof according to one of Claims 10 to 19, **characterized in that** the front link (14) of the front link device (14, 15) is lowered into the front section of the depression (31) when in its pivoted-back open position.

21. Vehicle roof according to one of Claims 1 to 20, **characterized in that** a front link (14) of the front link device (14, 15) is pivotably mounted by means of a rotary bearing (44), which is arranged on a supporting arm (21) projecting forward on the central roof part (4), in front of the roof surface (23) of the central roof part (4), and **in that** the front link (14) is driven via a lever mechanism (20).

22. Vehicle roof according to Claim 21, **characterized in that** the lever mechanism (20) is positively coupled to a main pivoting drive for storing the roof (1) or has a dedicated drive

23. Vehicle roof according to Claim 21 or 22, **characterized in that** the front link (14) is driven via a drive rod (25) and an interposed lever mechanism (20), which has an attachment lever that can be pivoted on the central roof part (4) about a fixed pivot axis, in an arrangement such that a relatively large drive lever arm is provided with a constant or reduced drive movement of the drive rod (25).

24. Vehicle roof according to one of Claims 21 to 23, **characterized in that** the front link (14) is driven via a drive rod (25) and an interposed lever mechanism (20), which has an attachment lever (46) that can be pivoted on the central roof part (4) about a fixed pivot axis, to which the drive rod (25) is attached, the fixed pivot axis (48) of the attachment lever (46) being arranged in such a way that, at least in one of the two end positions of the pivoting movement of the front link (14), the spacing of the pivot axis (48) from the attachment point (27) of the drive rod (25) to the attachment lever (46), based on the drive rod (25), is greater than the lateral spacing of the rotary bearing (44) of the front link (14) from the attachment point (27) of the drive rod (25) to the attachment lever (46).

## Revendications

1. Toit de véhicule avec une partie de toit avant (3), une partie de toit intermédiaire (4) et une partie de toit arrière (5), qui sont mobiles entre une position fermée recouvrant l'habitacle du véhicule et une position de rangement, dégageant l'habitacle, dans un compartiment arrière (10) de rangement de toit, sachant que la partie de toit intermédiaire (4) est montée à pivotement sur la carrosserie au moyen d'un mécanisme articulé (12, 13) et que la partie de toit avant (3) est montée à déplacement sur la partie de toit intermédiaire (4) au moyen d'un mécanisme articulé (14, 15) et est déplacée sur la partie de toit intermédiaire (4) lors du rangement,
**caractérisé en ce que** la partie de toit arrière (5) est montée à pivotement sur la partie de toit intermédiaire (4) au moyen d'un mécanisme articulé (16, 17) et, lors du rangement du toit (1), est déplacée au-dessus de la partie de toit intermédiaire (3, 4), de sorte que les trois parties de toit (3, 4, 5) sont rangées les unes au-dessus des autres dans une position identiquement bombée.

2. Toit de véhicule selon la revendication 1, **caractérisé en ce que**, lors de la fermeture du toit (1), la partie de toit arrière (5) repose en étanchéité par son bord arrière (57) sur une trappe fermée (11) de compartiment de rangement.

3. Toit de véhicule selon la revendication 1 ou 2, **caractérisé en ce que** le mouvement de pivotement de la partie de toit arrière (5) par rapport à la partie de toit intermédiaire (4) s'effectue en fonction du mouvement de pivotement du mécanisme articulé (12, 13) recevant la partie de toit intermédiaire (4).

4. Toit de véhicule selon la revendication 3, **caractérisé en ce que** la partie de toit arrière (5) se trouve, au moyen d'un mécanisme cinématique, en accouplement forcé avec le mécanisme articulé (12, 13) recevant la partie de toit intermédiaire (4).

5. Toit de véhicule selon l'une des revendications 1 à 4, **caractérisé en ce que** le mécanisme articulé (14, 15) pour la partie de toit avant (3) se trouve, au moyen d'un mécanisme cinématique, en accouplement forcé avec le mécanisme articulé (12, 13) recevant la partie de toit intermédiaire (4).

6. Toit de véhicule selon l'une des revendications 1 à 5, **caractérisé en ce qu'**une plage arrière (19) est montée à déplacement sur le côté avant d'une trappe (11) de compartiment de rangement, de sorte que, lors du relevage par pivotement de la trappe (11) de compartiment de rangement, elle peut être déplacée dans une position rentrée sous la trappe (11) de compartiment de rangement.

7. Toit de véhicule selon la revendication 6, **caractérisé en ce que**, dans une succession commandée lors du rangement du toit (1), à la suite du soulèvement du bord arrière (57) de la partie de toit arrière (5) au-dessus de la trappe (11) de compartiment de rangement, celle-ci est relevée par pivotement par son bord avant (58) dans sa position ouverte et la plage arrière (19) est alors déplacée dans sa position rentrée sous la trappe (11) de compartiment de rangement afin, lors du mouvement d'abaissement de la partie de toit arrière (5) dans le compartiment de rangement de toit (10), d'assurer au bord arrière (57) de la partie de toit arrière (5) une voie de déplacement devant le bord avant (58) de la trappe (11) de compartiment de rangement et le bord avant (63) de la plage arrière (19).

8. Toit de véhicule selon l'une des revendications 1 à 7, **caractérisé en ce que** la partie de toit arrière (5) peut être déplacée par rapport à la partie de toit intermédiaire (4) au moyen d'un propre entraînement.

9. Toit de véhicule selon l'une des revendications 1 à 8, **caractérisé en ce que** la partie de toit arrière (5) et la partie de toit avant (3) sont couplées en déplacement conjoint et peuvent être déplacées au moyen d'un propre entraînement.

10. Toit de véhicule selon l'une des revendications 1 à 9, **caractérisé en ce qu'**un bras articulé arrière (15) du mécanisme articulé avant (14, 15) est monté sur la partie de toit intermédiaire (4) à pivotement autour d'un axe de pivotement (29) en retrait par rapport au bord avant (22) de celle-ci et, lors du rangement du toit (1), pivote vers le haut hors de la surface de toit (23) de la partie de toit intermédiaire (4).

11. Toit de véhicule selon la revendication 10, **caractérisé en ce qu'**un bras articulé avant (14) du mécanisme articulé avant (14, 15) est monté à pivotement dans une articulation (44) qui est disposée sur un bras porteur (21) dépassant vers l'avant sur la partie de toit intermédiaire (4) devant la surface de toit (23) de la partie de toit intermédiaire (4).

12. Toit de véhicule selon la revendication 10 ou 11, **caractérisé en ce que** le bras articulé arrière (15) est, en position fermée du toit (1), disposé à fleur de la surface de toit (23) de la partie de toit intermédiaire (4) ou en dessous de la surface de toit (23).

13. Toit de véhicule selon l'une des revendications 10 à 12, **caractérisé en ce que** le bras articulé arrière (15) est, en position fermée, reçu dans un renfoncement (31) de la partie de toit intermédiaire (4) qui s'ouvre vers le haut.

14. Toit de véhicule selon la revendication 13, **caractérisé en ce que** le bras articulé arrière (15) est, en position ouverte ramenée par pivotement, abaissé au moins partiellement dans la partie arrière du renfoncement (31).

15. Toit de véhicule selon la revendication 13 ou 14, **caractérisé en ce que** le renfoncement (31) est disposé entre une partie médiane (32) et une partie latérale (33) de la partie de toit intermédiaire (4).

16. Toit de véhicule selon l'une des revendications 13 à 15, **caractérisé en ce que**, en position fermée du toit (1), un cache (40) recouvre la partie arrière du renfoncement (31) depuis le bras articulé arrière (15) vers l'arrière.

17. Toit de véhicule selon la revendication 16, **caractérisé en ce que** le cache (40) est enfoncé dans le renfoncement (31) par le bras articulé arrière (15) qui pivote.

18. Toit de véhicule selon la revendication 16 ou 17, **caractérisé en ce que** le cache (40) est fixé à son extrémité arrière sur la partie de toit intermédiaire (4) et, à son extrémité avant (42), est enfoncé dans le renfoncement (31) par une saillie arrière (43) du bras articulé arrière (15) qui pivote.

19. Toit de véhicule selon l'une des revendications 10 à 18, **caractérisé en ce que** le bras articulé arrière (15) est articulé à l'extrémité arrière (67) de la partie de toit avant (3).

20. Toit de véhicule selon l'une des revendications 10 à 19, **caractérisé en ce que** le bras articulé avant (14) du mécanisme articulé avant (14, 15) est, dans sa position ouverte ramenée par pivotement, abaissé dans la partie avant du renfoncement (31).

21. Toit de véhicule selon l'une des revendications 1 à 20, **caractérisé en ce qu'**un bras articulé avant (14) du mécanisme articulé avant (14, 15) est monté à pivotement au moyen d'un palier de pivotement (44) qui est disposé sur un bras porteur (21) dépassant vers l'avant sur la partie de toit intermédiaire (4) devant la surface de toit (23) de la partie de toit intermédiaire (4), et **en ce que** le bras articulé avant (14) est entraîné au moyen d'une transmission à leviers (20).

22. Toit de véhicule selon la revendication 21, **caractérisé en ce que** la transmission à leviers (20) est en accouplement forcé avec un entraînement principal en pivotement pour le rangement du toit (1), ou présente un propre entraînement.

23. Toit de véhicule selon la revendication 21 ou 22, **caractérisé en ce que** le bras articulé avant (14) est entraîné par l'intermédiaire d'une tige d'entraînement (25) et d'une transmission à leviers intercalée (20) qui présente un levier d'articulation, pouvant pivoter autour d'un axe de pivotement fixe sur la partie de toit intermédiaire (4), dans une disposition telle qu'on dispose d'un plus grand bras de levier d'entraînement pour un mouvement d'entraînement identique ou réduit de la tige d'entraînement (25).

24. Toit de véhicule selon l'une des revendications 21 à 23, **caractérisé en ce que** le bras articulé avant (14) est entraîné par l'intermédiaire d'une tige d'entraînement (25) et d'une transmission à leviers intercalée (20) qui présente un levier d'articulation (46) pouvant pivoter autour d'un axe de pivotement fixe (48) sur la partie de toit intermédiaire (4) et auquel est articulée la tige d'entraînement (25), sachant que l'axe de pivotement fixe (48) du levier d'articulation (46) est disposé de telle sorte que, au moins dans une des deux positions finales du mouvement de pivotement du bras articulé avant (14), la distance latérale, relativement à la tige d'entraînement (25), entre l'axe de pivotement (48) et le point d'articulation (27) de la tige d'entraînement (25) sur le levier d'articulation (46) est plus grande que la distance latérale entre le palier de pivotement (44) du bras articulé avant (14) et le point d'articulation (27) de la tige d'entraînement (25) sur le levier d'articulation (46).
